# EUROPEAN PATENT SPECIFICATION

(11) **EP 4 360 847 B1**
(45) Date of publication and mention of the grant of the patent: **07.01.2026**
(21) Application number: 21947222.2
(22) Date of filing: 24.11.2021
(51) Int. Cl.: B29C 33/02, B29C 33/26, B29C 35/02, B29L 30/00, B29D 30/06

(54) **TIRE MOLDING MOLD AND TIRE MANUFACTURING METHOD**
REIFENFORM UND REIFENHERSTELLUNGSVERFAHREN
MOULE POUR PNEU ET PROCÉDÉ DE FABRICATION DE PNEU

(30) Priority: 22.06.2021 JP 2021103650
(43) Date of publication of application: 01.05.2024
(73) Proprietor: BRIDGESTONE CORPORATION, Chuo-ku Tokyo 104-8340 (JP)
(72) Inventor: ISHIHARA Yasuyuki, Tokyo 104-8340 (JP)
(74) Representative: Marks & Clerk LLP
(86) International application number: PCT/JP2021/043052
(87) International publication number: WO 2022/269943

(56) References cited:
- EP-A1- 1 935 624
- WO-A1-2020/170347
- JP-A- 2018 202 787
- JP-A- 2018 202 787
- JP-A- S50 157 478
- JP-A- S50 157 478
- JP-A- S52 103 479
- JP-U- H0 528 614

## Description

### TECHNICAL FIELD

This disclosure relates to a mold for forming a tire and a tire production method.

### BACKGROUND

In a known conventional mold for forming a tire for use in vulcanization molding of an unvulcanized raw tire to produce a tire, it is known that an annular tread molding part (a tread mold) for forming a tread of a tire is divided into a plurality of segments arranged in a circumferential direction and is configured to be opened and closed by moving each of the segments in a radial direction (for example, see PTLs 1 to 3).

### CITATION LIST

### Patent Literature

PTL 1: JP 2000-326332 A
PTL 2: JP 2000-334740 A
PTL 3: JP 2009-149079 A
PTL 4: JP S50-157478 A
PTL 5: JP 2018-202787 A
PTL 6: EP 1935624 A1
JP S50-157478 A discloses a feature in a mold for molding tires, and in particular, an improved fineness for molding and adding tires having rigid breakers and a method of using such molds. The method allows the pattern can be inserted into the trend rubber of the tire's car with little or no relative axial interlock between the tire and the mold.
JP 2018-202787 A discloses a device to open/close a plurality of split molds with ease by suppressing occurrence of galling in a plurality of the split molds. The plurality of split molds are arranged in a ring shape along a tire circumferential direction to mold a tire. A rotation support part of a support member is connected to one end part in a tire width direction of the split mold. The support member supports the split mold to be rotatable toward the outside and the inside in the tire radial direction with the rotation support part as a center. A moving mechanism moves the split mold at least by rotating, to arrange the split molds at a molding position for molding the tire and a separation position separated from the tire.
EP 1935624 A1 discloses a tire mold having a first mold half, a second mold half, and a center ring portion formed of a plurality of tread segments. Each mold half has an inner surface with a sidewall molding portion and each of said tread segments has an inner surface having a tread molding portion, each tread molding portion terminating at a first split plane and a second split plane. Each of the center ring segments further comprises a first segment register surface for engagement with a first mold register surface of the first mold half and a second segment register surface for engagement with a second mold reverse register surface of the second mold half. Each of the tread segments has a radially outward flange forming a hinge for rotatably mounting each tread segment to the second mold half.

### SUMMARY

### (Technical Problem)

However, in the above-described conventional mold for forming a tire or the above-described conventional tire production method, when the tire is released from the tread molding part after vulcanization molding, each of the segments is moved toward a radially outer side with maintaining the orientation of each of the segments to a tread of the tire. As a result, all portions of the tread design surface for forming the tread of the segment are to peel off from the tread simultaneously. Therefore, there has been a problem in that a great driving force is required for driving the segments in the initial stage of mold releasing of the tire.

This disclosure has been accomplished in view of the above-described problem and it is an object of this disclosure to provide a mold for forming a tire and a tire production method which can reduce driving force required for driving the segments in the initial stage of mold releasing of the tire.

### (Solution to Problem)

The mold for forming the tire of this disclosure is a mold according to claim 1.

The mold for forming the tire of this disclosure is configured in such a way that the external force application mechanism includes a for-rotation spring member for application of spring force as external force to the segment.

In an embodiment, the mold for forming the tire of this disclosure can be configured in such a way that an outer ring which is disposed on a radially outer side of the segment and movable between a retention position at which the segment is retained at a predetermined position and a release position which allows for rotation of the segment around the rotatable shaft toward the radially outer side.

In an embodiment, the mold for forming the tire of this disclosure can be configured in such a way that the mold includes a guide rail supporting the base member to be movable in a radial direction of the tread molding part; and a for-sliding spring member biasing the base member toward a radially outer side of the tread molding part, wherein the segment is moved toward a radially outer side with the segment being rotated about the rotatable shaft.

In an embodiment, the mold for forming the tire of this disclosure can be configured in such a way that when the tread molding part is opened after vulcanization molding of the tire, the first segment is rotated around the first rotatable shaft, and subsequently, the second segment is rotated around the second rotatable shaft.

The tire production method of this disclosure is a tire production method according to claim 5.

### (Advantageous Effect)

This disclosure can provide a mold for forming a tire and a tire production method which can reduce driving force required for driving the segments in the initial stage of mold releasing of the tire.

### BRIEF DESCRIPTION OF THE DRAWINGS

In the accompanying drawings:
FIG. 1 is a cross-sectional view of a mold for forming a tire according to an embodiment of this disclosure, which is illustrated in a front view;
FIG. 2 is a cross-sectional view of the tread molding part illustrated in FIG. 1, which is illustrated in a planar view;
FIG. 3 is an enlarged cross-sectional view of detailed structure of the main portion of the mold for forming the tire illustrated in FIG. 1, which is illustrated in a front view;
FIG. 4 is an enlarged cross-sectional view of detailed structure of the main portion of one segment illustrated in FIG. 3, which is illustrated in a front view;
FIG. 5 is a cross-sectional view of the state of the main portion of the mold for forming the tire in the initial stage of mold releasing of the tire, which is illustrated in a planar view; and
FIG. 6 is a cross-sectional view of the state of the main portion of the mold for forming the tire where the mold releasing of the tire is further proceeded from the state illustrated in FIG. 5, which is illustrated in a planar view.

### DETAILED DESCRIPTION

By way of example, a mold for forming a tire and a tire production method according to an embodiment of this disclosure will now be described in detail with reference to the drawings. In this regard, common members and portions appearing in the drawings have the same reference signs.

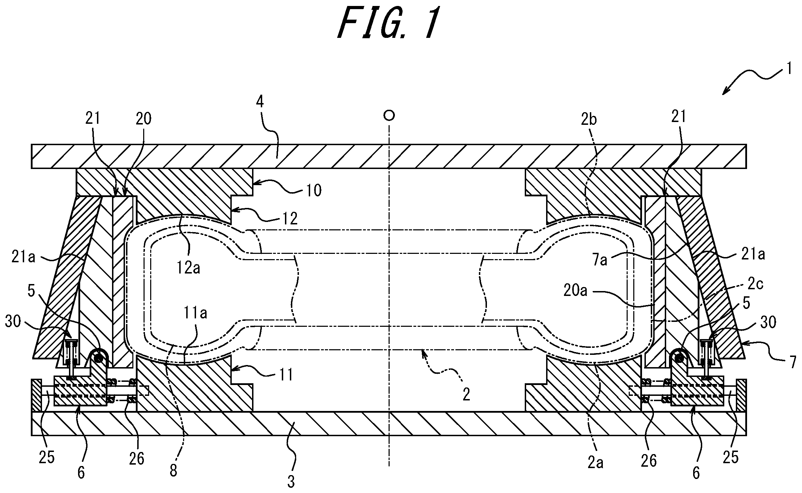

A mold for forming a tire 1 illustrated in FIG. 1 according to an embodiment of this disclosure is for use in forming an unvulcanized (before vulcanization) raw tire based on a synthetic rubber into a predetermined shape with the raw tire being vulcanized to produce a tire 2.

In this regard, the tire 2 is a hollow tire based on a synthetic rubber including a pair of sidewalls 2a, 2b and a tread 2c, and is shaped to provide the interior of the tire 2 with a space for filling of a gas such as air or nitrogen.

The mold for forming the tire 1 includes a sidewall molding part 10 and a tread molding part 20.

For example, the sidewall molding part 10 can include an annular lower sidewall molding part 11 fixed to a top surface of a lower container 3, and an annular upper sidewall molding part 12 fixed to a bottom surface of an upper container 4.

The sidewall molding part 10 can dispose (accommodate) an annular tire 2 or a raw tire between the lower sidewall molding part 11 and the upper sidewall molding part 12 to be in an orientation by which the central axis of the raw tire becomes coaxial with the central axis O of the sidewall molding part 10. The lower sidewall molding part 11 includes a lower sidewall design surface 11a, which is in the form of a ring around the central axis O and is oriented toward the upward direction. The lower sidewall molding part 11 can form an outer surface of a sidewall 2a of one of the tire 2 or the raw tire (any of which is oriented toward the downward direction in FIG. 1) by the lower sidewall design surface 11a. Similarly, the upper sidewall molding part 12 includes an upper sidewall design surface 12a, which is in the form of a ring around the central axis O and is oriented toward the downward direction. The upper sidewall molding part 12 can form an outer surface of a sidewall 2b of the other of the tire 2 or the raw tire (any of which is oriented toward the upward direction in FIG. 1) by the upper sidewall design surface 12a. By moving the upper container 4, from a position illustrated in FIG. 1, upwardly (the direction in which the upper container 4 and the lower container 3 is moved away from each other along the central axis of the tire 2) and relatively to the lower container 3, the sidewall molding part 10 is opened and the tire 2 is released from the sidewall molding part 10. By moving the upper container 4 downwardly to its original position illustrated in FIG. 1, the sidewall molding part 10 in an opened configuration is closed to allow for forming of the tire 2 or the raw tire.

In this regard, modifications can be made to the configuration of the sidewall molding part 10 as appropriate, and examples of such modifications include a configuration in which the sidewall molding part 10 is opened by moving the lower container 3 downwardly and relatively to the upper container 4.

The tread molding part 20 is annular and coaxial with the sidewall molding part 10 and is disposed adjacent to a radially outer side of the lower sidewall molding part 11 and the upper sidewall molding part 12. The inner circumferential surface oriented toward the radially inner side of the tread molding part 20 is a tread design surface 20a for forming an outer circumferential surface of the tread 2c of the tire 2.

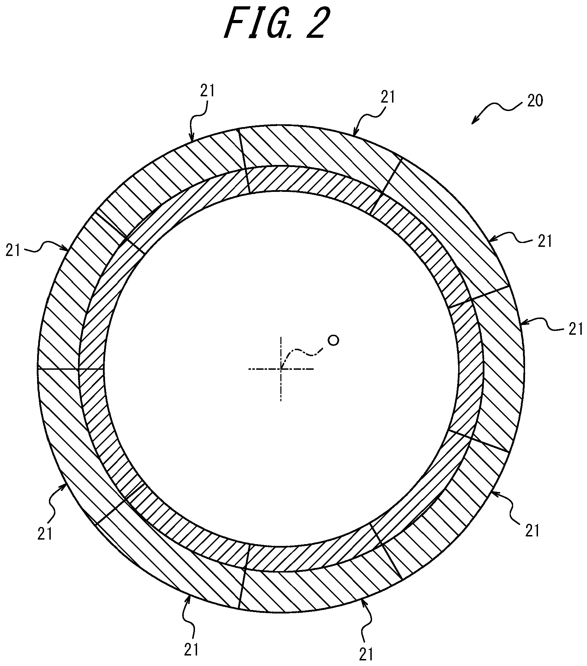

As illustrated in FIG. 2, the tread molding part 20 is divided into a plurality of segments 21 arranged in a circumferential direction. Each of the segments 21 is in the form of arc in a planar view and the segments 21 are combined in a circumferentially arranged manner to constitute a tread molding part 20, which is an annular mold as a whole. In this embodiment, the tread molding part 20 is divided into nine segments 21 having the same length in a circumferential direction. In this regard, the division number of the tread molding part 20 in a circumferential direction is preferably, but not limited to, 7 to 13 and can be changed as appropriate.

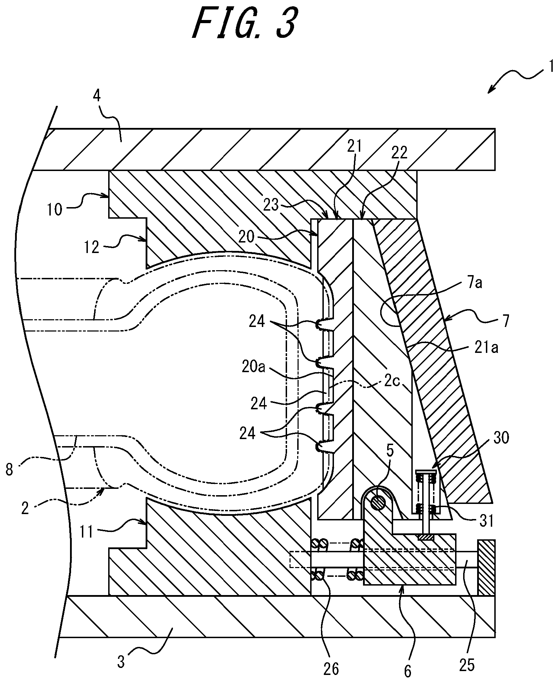

As illustrated in FIG.3, in this embodiment, each of the plurality of the segments 21 constituting the tread molding part 20 includes a holder 22 and a design surface dividing mold part 23.

The holder 22 can be formed, for example, by cutting a block made of metal such as low carbon steel.

The design surface dividing mold part 23 is a portion which constitutes a tread design surface 20a for forming the tread 2c of the tire 2 and is in the form of arc in a planar view and, and a surface oriented toward the radially inner side constitutes a circumferential divided portion of the tread design surface 20a. The design surface dividing mold part 23 is disposed on the radially inner side of the holder 22 corresponding to the design surface dividing mold part 23, and is fixed to the holder 22 by using a fixing member such as a bolt (not illustrated).

The design surface dividing mold part 23 can be configured in such a way that the tread design surface 20a is provided with a plurality of projections 24 which protrude in a radial direction from the tread design surface 20a toward the radially inner side. The plurality of the projections 24 are used to form, for example, a groove or sipe, which constitutes a tread pattern, on the tread 2c of the tire 2 in vulcanization molding. The plurality of the projections 24 can be of various shapes or sizes (length) tailored to the tread pattern, such as a plurality of projections 24 extending in a tire width direction and a plurality of projections 24 extending in a tire circumferential direction. In this regard, the tread design surface 20a may not be provided with projections 24.

The design surface dividing mold part 23 is preferably formed by casting of a metal material having high thermal conductivity such as, for example, an aluminum alloy. In this case, for example, rib-shaped or blade-shaped projections 24 made of steel can be provided by integrating with the design surface dividing mold part 23 in casting of the design surface dividing mold part 23.

As illustrated in FIG.3, on the side of one end (in the case illustrated in FIG. 3, the upper end side) in a direction of the axis of the tread molding part 20, each of the segments 21 includes a rotatable shaft 5 which is perpendicular to a direction of movement of the segment 21 (radial direction) and also to the axis of the tread molding part 20. The rotatable shaft 5 is disposed on the lower end portion of the holder 22.

In the downward direction of each of the segments 21, an individual base member 6 corresponding to the segment 21 is disposed. The rotatable shaft 5 is supported by the base member 6, and thus, the segment 21 is supported by the base member 6 to be rotatable around the rotatable shaft 5. In other words, the segment 21 is rotatable around the rotatable shaft 5 in relation to the base member 6.

The tread molding part 20 can be opened in such a way that after vulcanization molding of the tire 2 in the situation where each of the segments 21 is at a predetermined position, each of the segments 21 is rotated from the predetermined position toward the radially outer side around the rotatable shaft 5 to release the tread 2c from the tread design surface 20a.

The base member 6 is supported by a guide rail 25 extending in a radial direction of the segment 21, and the guide rail 25 is supported by the lower container 3 and the lower sidewall molding part 11. As a result, can be moved in a radial direction centered on the axis of the tread molding part 20 (central axis O). Also, a for-sliding spring member 26 is disposed between the base member 6 and the lower sidewall molding part 11, and each of the segments 21 is biased toward the radially outer side by the for-sliding spring member 26 corresponding to the each of the segments 21. When the base member 6 is moved in a radial direction moved, the segment 21 supported by the base member 6 is moved in the radial direction together with the base member 6.

Between each of the segments 21 and the base member 6 corresponding to the segment 21, an external force application mechanism 30 is disposed which, when the tread molding part 20 is opened after vulcanization molding of the tire 2, applies external force to the segment 21 to rotate the segment 21 toward a direction in which the side of the upper end of the segment 21 is moved around the rotatable shaft 5 toward the radially outer side.

The external force application mechanism 30 includes a for-rotation spring member 31 for application of spring force as external force to the segment 21.

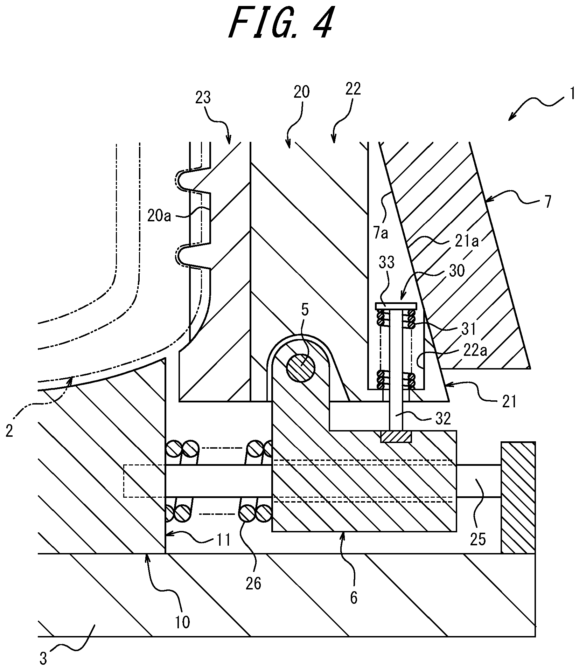

More particularly, as illustrated in FIG. 4, the external force application mechanism 30 includes a shaft-shaped body 32 fixed to the top surface of the base member 6 in such a way that the shaft-shaped body 32 is perpendicular to the top surface and extends in the up-down direction. The shaft-shaped body 32 is inserted into a hole 22a provided in the holder 22 constituting the segment 21 and a flange portion 33 provided on the upper end of the shaft-shaped body 32 is disposed in the hole 22a. The for-rotation spring member 31 is a helical compression spring and disposed to be compressed between the flange portion 33 and a bottom wall of the hole 22a. As a result of this, by the external force application mechanism 30, external force is applied to the segment 21 to rotate the segment 21 toward a direction in which the side of the upper end of the segment 21 is moved around the rotatable shaft 5 toward a radially outer side.

As illustrated in FIGs. 1, 3 and 4, an outer ring 7 is disposed on the radially outer side of each of the segments 21 to retain the segment 21 at a predetermined position against external force applied by the external force application mechanism 30. The outer ring 7 is fixed to an upper container 4 by the medium of the upper sidewall molding part 12 and can be moved, together with the upper container 4, in the up-down direction relatively to the segment 21 supported by the lower container 3 or the base member 6. In this regard, the term "predetermined position" refers to a position at which the segment 21 is in an orientation by which a tread design surface 20a provided on a design surface dividing mold part 23 is continuously connected, in a circumferentially arranged manner, with a tread design surface 20a provided on a design surface dividing mold part 23 of another segment 21.

The inner circumferential surface of the outer ring 7 oriented toward the radially inner side is provided with a tapered surface 7a inclined in such a way that the outer diameter of the tapered surface 7a gradually becomes smaller toward the upward direction. The outer circumferential surface of each of the segments 21 oriented toward the radially outer side is provided with a tapered surface 21a inclined in such a way that the outer diameter of the tapered surface 21a gradually becomes smaller toward the upward direction. In this embodiment, the tapered surface 21a is provided on the outer circumferential surface of the holder 22. When the outer ring 7 is at a retention position illustrated in FIGs. 1 and 3, the tapered surface 7a abuts the tapered surface 21a of the segment 21 to retain the segment 21 at a predetermined position. Also, when the tread molding part 20 is opened by moving the upper container 4 in the upward direction, the outer ring 7 can be moved to a release position located on the side of the upper direction in relation to the retention position together with the upper container 4.

The mold for forming the tire 1 includes a bladder 8 which is disposed in the interior of the raw tire and expanded by supplying of pressurized steam. Also, the mold for forming the tire 1 includes a heater (not illustrated) for heating the sidewall molding part 10 and the tread molding part 20. The location of the heater can be determined as appropriate.

Next, a method for vulcanization molding of a raw tire to produce a tire 2 having a predetermined shape by using a mold for forming a tire 1 having the above-described configuration, that is, a tire production method as an embodiment of this disclosure will be described.

First of all, a sidewall molding part 10 and a tread molding part 20 are opened to dispose a raw tire in the interior of a mold for forming a tire 1, and subsequently, the sidewall molding part 10 and the tread molding part 20 are closed.

Next, a bladder 8 is expanded by supplying pressurized steam to the bladder 8 disposed in the interior of the raw tire. As a result, sidewalls of the raw tire are pressed against a lower sidewall design surface 11a and an upper sidewall design surface 12a of the sidewall molding part 10, respectively, and a tread is pressed against a tread design surface 20a of the tread molding part 20. In this situation, a heater is used to heat the sidewall molding part 10 and the tread molding part 20, and such heat causes vulcanization of the synthetic rubber constituting the raw tire to form a tire 2 having a predetermined shape.

After forming of the tire 2 is completed, the sidewall molding part 10 and the tread molding part 20 are opened to remove a formed tire 2.

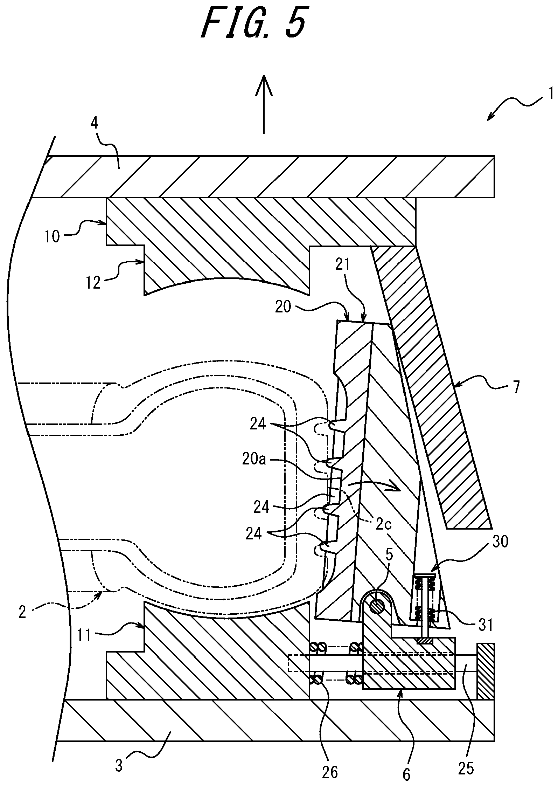

When the outer ring 7 is moved in the upward direction from the retention position toward the release position in relation to each of the segments 21 to open the tread molding part 20 after vulcanization molding of the tire 2, as illustrated in FIG. 5, for rotation of the segment 21 around the rotatable shaft 5 toward the radially outer side is allowed and the segment 21 is driven by the external force application mechanism 30 to spontaneously rotate (panning action) around the rotatable shaft 5 from a predetermined position toward the radially outer side.

As described above, in the tire production method by using the mold for forming the tire 1 of this embodiment, when the tread molding part 20 is opened after vulcanization molding of the tire 2, by applying external force to the segment 21 by the external force application mechanism 30, the tire 2 can be released from the tread molding part 20 with the segment 21 being rotated around the rotatable shaft 5 provided on the side of one end (the side of lower end) of the segment 21. As a result of this, the tread 2c of the tire 2 is gradually released from the side of one end (in FIG. 5, the upper end side) of the design surface dividing mold part 23 in a width direction of the tire 2, followed by releasing from the side of the other end (in FIG. 8, the lower end side). Thus, outside air is gradually introduced between the tread 2c and the tread design surface 20a from the side of one end to allow for reducing mold releasing resistance of the tread 2c of the tire 2 from the tread design surface 20a in the initial stage of mold releasing of the tire 2. Therefore, force required for mold releasing of the tread 2c of the tire 2 from the tread design surface 20a in the initial stage of mold releasing of the tire 2 is reduced, and thus, the tire 2 can be reliably released from the tread molding part 20 by external force applied by the external force application mechanism 30. Also, driving force applied to the segment 21 in mold releasing of the tire 2 can be reduced, and as a result, the external force application mechanism 30 can be downsized to reduce the production costs. In addition, mold releasing resistance of the tread 2c of the tire 2 from the tread design surface 20a can be reduced, and as a result, the generation of residual strain (permanent deformation) in the tire 2 after mold releasing can be suppressed to improve the initial performance of the tire 2.

Also, in mold releasing of the tire 2 from the tread molding part 20, each of the design surface dividing mold parts 23 rotates around the rotatable shaft 5 to reduce undercut resistance of the tread 2c of the tire 2 caused by the projections 24. As a result, driving force required for driving the segments 21 in the initial stage of mold releasing of the tire 2 can be further reduced. In addition, in mold releasing of the tire 2 from the tread molding part 20, defects such as permanent deformation in the formed tread 2c of the tire 2 and the failure of the projections 24 can be suppressed by preventing excessively high undercut resistance.

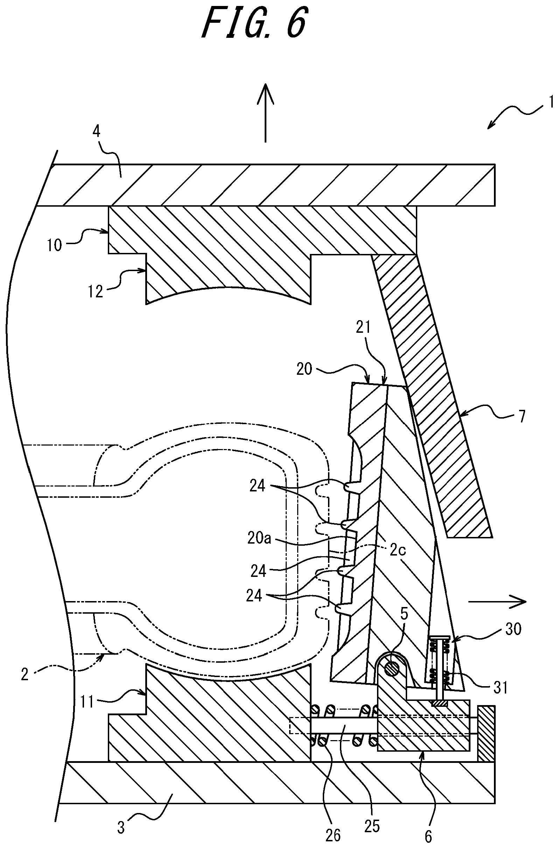

Also, the mold for forming the tire 1 of this embodiment is configured to include a guide rail 25 supporting the base member 6 to be movable in a radial direction of the tread molding part 20; and a for-sliding spring member 26 biasing the base member 6 toward the radially outer side of the tread molding part 20. In the mold for forming the tire 1 of this embodiment, when the outer ring 7 is moved to the release position, as illustrated in FIG. 6, the segment 21 is biased by the for-sliding spring member 26 to be moved together with the base member 6 along the guide rail 25 toward the radially outer side with the segment 21 being spontaneously rotated around the rotatable shaft 5 from a predetermined position toward the radially outer side external force applied by the external force application mechanism 30. As a result of this, in the case where the protruding height of the projections 24 provided on the tread design surface 20a is high, for example, in the case of forming a large tire for use in construction vehicles and the like, undercut resistance of the tread 2c of the tire 2 caused by the projections 24 in rotation of segment 21 around the rotatable shaft 5 can be reduced can be reduced. In addition, in mold releasing of the tire 2, it is possible to move the segment 21 to a position at which obstruction by the projections 24 does not occur, and as a result, mold releasing of the tire 2 can be performed more easily.

In addition, the mold for forming the tire 1 of this embodiment is configured in such a way that the external force application mechanism 30 includes the for-rotation spring member 31 for application of spring force as external force to the segment 21. Therefore, the configuration of the external force application mechanism 30 is simplified, and thus, the production costs of the tire 2 can be further reduced.

In this regard, the external force application mechanism 30 may not be configured to include a for-rotation spring member 31 for application of spring force as external force to the segment 21 and can be configured in such a way that external force is applied to the segment 21 by a driving force source such as an air cylinder.

In addition, the mold for forming the tire 1 of this embodiment is configured to include an outer ring 7 which is disposed on the radially outer side of the segment 21 and movable between a retention position at which the segment 21 is retained at a predetermined position and a release position which allows for rotation of the segment 21 around the rotatable shaft 5 toward the radially outer side. As a result, the mechanism of opening and closing the segment 21 can be simplified to reduce the production costs of the tire 2 further.

The mold for forming the tire 1 of this embodiment can be configured in such a way that when the tread molding part 20 is opened after vulcanization molding of the tire 2, one segment (first segment) 21 of a plurality of segments 21 is rotated around the rotatable shaft 5 (first rotatable shaft) toward a radially outer side, and subsequently, another segment (second segment) 21 of the plurality of the segments 21 is rotated around the rotatable shaft (second rotatable shaft) 5 toward the radially outer side. In other words, the plurality of the segments 21 can be rotated sequentially with time differences between rotation of the segments 21. In this case, the segments 21 can be rotated, in a circumferentially sequential manner, around the rotatable shaft 5 toward the radially outer side in such a way that one segment 21 is rotated around the rotatable shaft 5 toward the radially outer side, and subsequently, a segment 21 adjacent to the segment 21 is rotated around the rotatable shaft 5 toward the radially outer side, and then, a segment 21 adjacent to the segment 21 is rotated around the rotatable shaft 5 toward the radially outer side. As a result of the above-described configuration, in the initial stage of mold releasing of the tire 2, the tread 2c is released from the tread design surface 20c in such a way that portions of the tread 2c is released sequentially in a circumferential direction. In consequence, the tread 2c of the tire 2 can be released from the tread design surface 20a by more small driving force.

As a matter of course, this disclosure is not limited to the above-described embodiment and a variety of modifications are possible without departing from the scope of this disclosure, which is defined by the appended claims.

For example, in the above-described embodiment, each of the segments 21 is provided with the holder 22, the design surface dividing mold part 23 is fixed to the holder 22, and the holder 22 is supported by the rotatable shaft 5 to be rotatable in relation to the base member 6. However, it is also possible that the holder 22 is not provided, and the design surface dividing mold part 23 is supported on the base member 6 by the rotatable shaft 5.

Also, the tread molding part 20 can be configured in such a way that the base member 6 cannot be moved in a radial direction and the tread molding part 20 is opened purely by rotation of the segment 21 around the rotatable shaft 5.

### REFERENCE SIGNS LIST

- 1: Mold for forming a tire
- 2: Tire
- 2a: Sidewall
- 2b: Sidewall
- 2c: Tread
- 3: Lower container
- 4: Upper container
- 5: Rotatable shaft
- 6: Base member
- 7: Outer ring
- 7a: Tapered surface
- 8: Bladder
- 10: Sidewall molding part
- 11: Lower sidewall molding part
- 11a: Lower sidewall design surface
- 12: Upper sidewall molding part
- 12a: Upper sidewall design surface
- 20: Tread molding part
- 20a: Tread design surface
- 21: Segment
- 21a: Tapered surface Ref. No. (12/16)
- 22: Holder
- 22a: Hole
- 23: Design surface dividing mold part
- 24: Projection
- 25: Guide rail
- 26: For-sliding spring member
- 30: External force application mechanism
- 31: For-rotation spring member
- 32: Shaft-shaped body
- 33: Flange portion

## Claims

1. A mold (1) for forming a tire (2) for vulcanization molding of an unvulcanized raw tire into a tire (2), the mold (1) comprising an annular tread molding part (20) which is divided into a plurality of segments (21) arranged in a circumferential direction, wherein the mold (1) comprises
a rotatable shaft (5) which is provided on a side of one end of the segment (21) in a direction of an axis of the tread molding part (20) and which is perpendicular to a direction of movement of the segment (21) and also to the axis of the tread molding part (20); and
a base member (6) supporting the segment (21) to be rotatable around the rotatable shaft (5), the rotatable shaft (5) supported by the base member (6); and
an external force application mechanism (30) which, when the tread molding part (20) is opened, applies external force to the segment (21) to rotate the segment (21) toward a direction in which a side of the other end of the segment (21) in the direction of the axis is moved around the rotatable shaft (5) toward a radially outer side, **characterised in that**
the base member (6) is supported by a guide rail (25), extending in a radial direction of the segment (21), and is moveable in a radial direction centered on the axis of the tread molding part (20), and
the external force application mechanism (30) includes,
a shaft-shaped body (32) fixed to a top surface of the base member (6) such that the shaft-shaped body (32) is perpendicular to the top surface and extends in the up-down direction and inserted into a hole (22a) provided in a holder (22) constituting the segment (21),
a flange portion (33) provided on the upper end of the shaft-shaped body (32) and disposed in the hole (22a), and
a for-rotation spring member (31) for application of spring force as external force to the segment (21), the for-rotation spring member (31) is a helical compression spring compressible between the flange portion (33) and a bottom wall of the hole (22a).

2. The mold (1) for forming the tire (2) according to claim 1, the mold (1) comprising:
an outer ring (7) which is disposed on a radially outer side of the segment (21) and movable between a retention position at which the segment (21) is retained at a predetermined position and a release position which allows for rotation of the segment (21) around the rotatable shaft (5) toward the radially outer side.

3. The mold (1) for forming the tire (2) according to any one of claims 1 or 2, the mold (1) comprising:
a for-sliding spring member (26) biasing the base member (6) toward a radially outer side of the tread molding part (20), wherein
the segment (21) is moved toward the radially outer side with the segment (21) being rotated around the rotatable shaft (5).

4. The mold (1) for forming the tire (2) according to any one of claims 1 to 3, wherein
when the tread molding part (20) is opened after vulcanization molding of the tire (2), the first segment (21) is rotated around the first rotatable shaft (5), and subsequently, the second segment (21) is rotated around the second rotatable shaft (5).

5. A tire production method for vulcanization molding of an unvulcanized raw tire to produce a tire (2) by using a mold (1) for forming a tire comprising an annular tread molding part (20) which is divided into a plurality of segments (21) arranged in a circumferential direction, wherein
when the tread molding part (20) is opened after vulcanization molding of the tire (2), by applying external force to the segment (21) by an external force application mechanism (30), the tire (2) is released from the tread molding part (20) with the segment being rotated around a rotatable shaft (5) which is provided on a side of one end of the segment (21) in a direction of an axis of the tread molding part (20) and which is perpendicular to a direction of movement of the segment (21) and also to the axis of the tread molding part (20), **characterised in that**
the mold (1) for forming a tire (2) comprises a base member (6) supporting the segment (21) to be rotatable around the rotatable shaft (5), the rotatable shaft (5) supported by the base member (6),
the base member (6) is supported by a guide rail (25), extending in a radial direction of the segment (21), and is moveable in a radial direction centered on the axis of the tread molding part (20),
the external force application mechanism (30) includes,
a shaft-shaped body (32) fixed to a top surface of the base member (6) such that the shaft-shaped body (32) is perpendicular to the top surface and extends in the up-down direction and inserted into a hole (22a) provided in a holder (22) constituting the segment (21),
a flange portion (33) provided on the upper end of the shaft-shaped body (32) and disposed in the hole (22a), and
a for-rotation spring member (31) for application of spring force as external force to the segment (21), the for-rotation spring member (31) is a helical compression spring compressible between the flange portion (33) and a bottom wall of the hole (22a).

## Patentansprüche

1. Form (1) zum Formen eines Reifens (2) zum Vulkanisationsformen eines unvulkanisierten Rohreifens zu einem Reifen (2), wobei die Form (1) einen ringförmigen Laufflächenformteil (20) umfasst, der in eine Vielzahl von Segmenten (21) unterteilt ist, die in einer Umfangsrichtung angeordnet sind, wobei die Form (1) umfasst:
eine drehbare Welle (5), die an einer Seite eines Endes des Segments (21) in einer Richtung einer Achse des Laufflächenformteils (20) bereitgestellt ist und die senkrecht zu einer Bewegungsrichtung des Segments (21) und auch zu der Achse des Laufflächenformteils (20) ist; und
ein Basiselement (6), welches das Segment (21) trägt, sodass es um die drehbare Welle (5) drehbar ist, wobei die drehbare Welle (5) durch das Basiselement (6) getragen wird; und
einen Mechanismus (30) zum Aufbringen externer Kraft, der, wenn der Laufflächenformteil (20) geöffnet wird, eine externe Kraft auf das Segment (21) aufbringt, um das Segment (21) in eine Richtung zu drehen, in der eine Seite des anderen Endes des Segments (21) in die Richtung der Achse um die drehbare Welle (5) herum zu einer radial äußeren Seite bewegt wird, **dadurch gekennzeichnet, dass**:
das Basiselement (6) durch eine Führungsschiene (25) getragen wird, die sich in einer radialen Richtung des Segments (21) erstreckt, und in einer radialen Richtung, die auf der Achse des Laufflächenformteils (20) zentriert ist, bewegbar ist, und
der Mechanismus (30) zum Aufbringen externer Kraft einschließt:
einen schaftförmigen Körper (32), der an einer Oberseite des Basiselements (6) so befestigt ist, dass der schaftförmige Körper (32) senkrecht zu der Oberseite ist und sich in der Auf-Ab-Richtung erstreckt, und der in ein Loch (22a) eingesetzt ist, das in einem Halter (22), der das Segment (21) bildet, bereitgestellt ist,
einen Flanschabschnitt (33), der am oberen Ende des schaftförmigen Körpers (32) bereitgestellt und in dem Loch (22a) angeordnet ist, und
ein Dreh-Federelement (31) zum Aufbringen von Federkraft als externe Kraft auf das Segment (21), wobei das Dreh-Federelement (31) eine Druckschraubenfeder ist, die zwischen dem Flanschabschnitt (33) und einer Bodenwand des Lochs (22a) zusammendrückbar ist.

2. Form (1) zum Formen des Reifens (2) nach Anspruch 1, wobei die Form (1) umfasst:
einen äußeren Ring (7), der auf einer radial äußeren Seite des Segments (21) angeordnet und zwischen einer Halteposition, in der das Segment (21) in einer vorbestimmten Position gehalten wird, und einer Freigabeposition, die eine Drehung des Segments (21) um die drehbare Welle (5) zu der radial äußeren Seite ermöglicht, bewegbar ist.

3. Form (1) zum Formen des Reifens (2) nach einem der Ansprüche 1 oder 2, wobei die Form (1) umfasst:
ein Schiebe-Federelement (26), welches das Basiselement (6) in Richtung einer radial äußeren Seite des Laufflächenformteils (20) vorspannt, wobei
das Segment (21) zu der radial äußeren Seite bewegt wird, wobei das Segment (21) um die drehbare Welle (5) gedreht wird.

4. Form (1) zum Formen des Reifens (2) nach einem der Ansprüche 1 bis 3, wobei:
wenn das Laufflächenformteil (20) nach dem Vulkanisationsformen des Reifens (2) geöffnet wird, das erste Segment (21) um die erste drehbare Welle (5) gedreht wird und anschließend das zweite Segment (21) um die zweite drehbare Welle (5) gedreht wird.

5. Reifenherstellungsverfahren zum Vulkanisationsformen eines unvulkanisierten Rohreifens, um einen Reifen (2) herzustellen, und zwar durch Verwenden einer Form (1) zum Formen eines Reifens, die einen ringförmigen Laufflächenformteil (20) umfasst, der in eine Vielzahl von Segmenten (21) unterteilt ist, die in einer Umfangsrichtung angeordnet sind, wobei:
wenn der Laufflächenformteil (20) nach dem Vulkanisationsformen des Reifens (2) durch Aufbringen einer externen Kraft auf das Segment (21) durch einen Mechanismus (30) zum Aufbringen externer Kraft geöffnet wird, der Reifen (2) vom Laufflächenformteil (20) gelöst wird, wobei das Segment um eine drehbare Welle (5) gedreht wird, die an einer Seite eines Endes des Segments (21) in einer Richtung einer Achse des Laufflächenformteils (20) bereitgestellt ist und die senkrecht zu einer Bewegungsrichtung des Segments (21) und auch zu der Achse des Laufflächenformteils (20) ist, **dadurch gekennzeichnet, dass**:
die Form (1) zum Formen eines Reifens (2) ein Basiselement (6) umfasst, welches das Segment (21) trägt, sodass es um die drehbare Welle (5) drehbar ist, wobei die drehbare Welle (5) durch das Basiselement (6) getragen wird,
das Basiselement (6) durch eine Führungsschiene (25) getragen wird, die sich in einer radialen Richtung des Segments (21) erstreckt, und in einer radialen Richtung, die auf der Achse des Laufflächenformteils (20) zentriert ist, bewegbar ist,
der Mechanismus (30) zum Aufbringen externer Kraft einschließt:
einen schaftförmigen Körper (32), der an einer Oberseite des Basiselements (6) so befestigt ist, dass der schaftförmige Körper (32) senkrecht zu der Oberseite ist und sich in der Auf-Ab-Richtung erstreckt, und der in ein Loch (22a) eingesetzt ist, das in einem Halter (22), der das Segment (21) bildet, bereitgestellt ist,
einen Flanschabschnitt (33), der am oberen Ende des schaftförmigen Körpers (32) bereitgestellt und in dem Loch (22a) angeordnet ist, und
ein Dreh-Federelement (31) zum Aufbringen von Federkraft als externe Kraft auf das Segment (21), wobei das Dreh-Federelement (31) eine Druckschraubenfeder ist, die zwischen dem Flanschabschnitt (33) und einer Bodenwand des Lochs (22a) zusammendrückbar ist.

## Revendications

1. Moule (1) pour former un pneu (2) pour le moulage par vulcanisation d'un pneu brut non vulcanisé en un pneu (2), le moule (1) comprenant une partie de moulage de bande de roulement annulaire (20) qui est divisée en une pluralité de segments (21) disposés dans une direction circonférentielle, dans lequel le moule (1) comprend
un arbre rotatif (5) qui est prévu sur un côté d'une extrémité du segment (21) dans une direction d'un axe de la partie de moulage de bande de roulement (20) et qui est perpendiculaire à une direction de mouvement du segment (21) et également à l'axe de la partie de moulage de bande de roulement (20) ; et
un élément de base (6) supportant le segment (21) devant pouvoir tourner autour de l'arbre rotatif (5), l'arbre rotatif (5) étant supporté par l'élément de base (6) ; et
un mécanisme d'application de force externe (30) qui, lorsque la partie de moulage de bande de roulement (20) est ouverte, applique une force externe au segment (21) pour faire tourner le segment (21) dans une direction, dans laquelle un côté de l'autre extrémité du segment (21) dans la direction de l'axe est déplacé autour de l'arbre rotatif (5) vers un côté radialement extérieur, **caractérisé en ce que**
l'élément de base (6) est supporté par un rail de guidage (25), s'étendant dans une direction radiale du segment (21), et est mobile dans une direction radiale centrée sur l'axe de la partie de moulage de bande de roulement (20), et
le mécanisme d'application de force externe (30) inclut,
un corps en forme d'arbre (32) fixé à une surface supérieure de l'élément de base (6) de sorte que le corps en forme d'arbre (32) soit perpendiculaire à la surface supérieure et s'étende dans la direction de haut en bas et soit inséré dans un trou (22a) prévu dans un support (22) constituant le segment (21),
une partie formant bride (33) prévue sur l'extrémité supérieure du corps en forme d'arbre (32) et disposée dans le trou (22a), et
un élément de ressort pour la rotation (31) pour l'application d'une force de ressort en tant que force externe au segment (21), l'élément de ressort pour la rotation (31) est un ressort de compression hélicoïdal compressible entre la partie formant bride (33) et une paroi inférieure du trou (22a).

2. Moule (1) pour former le pneu (2) selon la revendication 1, le moule (1) comprenant :
une bague extérieure (7) qui est disposée sur un côté radialement extérieur du segment (21) et mobile entre une position de retenue, dans laquelle le segment (21) est retenu dans une position prédéterminée et une position de libération qui permet la rotation du segment (21) autour de l'arbre rotatif (5) vers le côté radialement extérieur.

3. Moule (1) pour former le pneu (2) selon l'une quelconque des revendications 1 ou 2, le moule (1) comprenant :
un élément de ressort pour le coulissement (26) inclinant l'élément de base (6) vers un côté radialement extérieur de la partie de moulage de bande de roulement (20), dans lequel
le segment (21) est déplacé vers le côté radialement extérieur, le segment (21) étant tourné autour de l'arbre rotatif (5).

4. Moule (1) pour former le pneu (2) selon l'une quelconque des revendications 1 à 3, dans lequel
lorsque la partie de moulage de bande de roulement (20) est ouverte après le moulage par vulcanisation du pneu (2), le premier segment (21) est tourné autour du premier arbre rotatif (5), et ensuite le second segment (21) est tourné autour du second arbre rotatif (5).

5. Procédé de production de pneu pour le moulage par vulcanisation d'un pneu brut non vulcanisé pour produire un pneu (2) en utilisant un moule (1) pour former un pneu comprenant une partie de moulage de bande de roulement annulaire (20) qui est divisée en une pluralité de segments (21) agencés dans une direction circonférentielle, dans lequel
lorsque la partie de moulage de bande de roulement (20) est ouverte après le moulage par vulcanisation du pneu (2), en appliquant une force externe au segment (21) par un mécanisme d'application de force externe (30), le pneu (2) est libéré de la partie de moulage de bande de roulement (20), le segment étant tourné autour d'un arbre rotatif (5) qui est prévu sur un côté d'une extrémité du segment (21) dans une direction d'un axe de la partie de moulage de bande de roulement (20) et qui est perpendiculaire à une direction de mouvement du segment (21) et également à l'axe de la partie de moulage de bande de roulement (20), **caractérisé en ce que**
le moule (1) pour former un pneu (2) comprend un élément de base (6) supportant le segment (21) devant pouvoir tourner autour de l'arbre rotatif (5), l'arbre rotatif (5) étant supporté par l'élément de base (6),
l'élément de base (6) est supporté par un rail de guidage (25), s'étendant dans une direction radiale du segment (21), et est mobile dans une direction radiale centrée sur l'axe de la partie de moulage de bande de roulement (20),
le mécanisme d'application de force externe (30) inclut,
un corps en forme d'arbre (32) fixé à une surface supérieure de l'élément de base (6) de sorte que le corps en forme d'arbre (32) soit perpendiculaire à la surface supérieure et s'étende dans la direction de haut en bas et soit inséré dans un trou (22a) prévu dans un support (22) constituant le segment (21),
une partie formant bride (33) prévue sur l'extrémité supérieure du corps en forme d'arbre (32) et disposée dans le trou (22a), et
un élément de ressort pour la rotation (31) pour l'application d'une force de ressort en tant que force externe au segment (21), l'élément de ressort pour la rotation (31) est un ressort de compression hélicoïdal compressible entre la partie formant bride (33) et une paroi inférieure du trou (22a).
